# EUROPEAN PATENT APPLICATION

(11) **EP 4 803 376 A1**
(43) Date of publication of application: **09.09.2026**
(21) Application number: 25747547.5
(22) Date of filing: 16.01.2025
(51) Int. Cl.: B60R 7/06, B62D 25/14

(54) **STORAGE BOX, DASHBOARD ASSEMBLY AND AUTOMOBILE**

(30) Priority: 29.01.2024 CN 202410131012
(71) Applicant: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: ZHANG, Shuaixing, Hangzhou, Zhejiang 310051 (CN)
(74) Representative: Murgitroyd & Company
(86) International application number: PCT/CN2025/072677
(87) International publication number: WO 2025/161975

(57) **Abstract**

A storage box includes a mounting frame (1), a rotating shaft (3), a box cover (2), and a damping device; the damping device includes an elastic member (4) and a connecting arm (5); one end of the box cover is hinged to the mounting frame through the rotating shaft; one end of the connecting arm is connected to the box cover, and the other end of the connecting arm is rotatably connected to the rotating shaft; and two ends of the elastic member are respectively connected to the connecting arm and the mounting frame. Also disclosed are an instrument panel assembly and a vehicle.

## Description

The present disclosure claims priority to Chinese Patent Application No. 202410131012.1, entitled "STORAGE BOX, INSTRUMENT PANEL ASSEMBLY, AND VEHICLE" and filed with CNIPA on January 29, 2024, which is incorporated herein by reference in its entirety.

### TECHNICAL FIELD

Embodiments of the present disclosure relate to, but are not limited to, the technical field of vehicle parts, and in particular to a storage box, an instrument panel assembly, and a vehicle.

### BACKGROUND

A storage box (or referred to as a glove box) is usually arranged at the lower right of an instrument panel of a vehicle. The storage box usually includes a mounting frame and a box cover, the mounting frame is mounted and fixed in the instrument panel, the box cover is hinged to the mounting frame through a rotating shaft, and the box cover or the mounting frame is provided with a storage bin for storage. To provide passengers with a better experience when opening the storage box, a damping mechanism is generally arranged to provide resistance when the box cover is opened, enabling the box cover to be opened slowly. At present, there are usually three types of damping mechanisms, i.e., air dampers, rack-and-pinion dampers, and cable dampers. The air damper and the rack-and-pinion damper are generally arranged on the sides of the mounting frame and the box cover, while the cable damper is generally arranged on the rear side of the mounting frame. All of these arrangements occupy a certain amount of space, which consequently significantly compromises the storage space of the storage box.

### SUMMARY

The following is a brief summary of subject matter described in detail herein. This summary is not intended to be limiting as to the scope of the claims.

A storage box includes a mounting frame, a rotating shaft, a box cover, and a damping device. The damping device includes an elastic member and a connecting arm. One end of the box cover is hinged to the mounting frame through the rotating shaft, one end of the connecting arm is connected to the box cover, and another end of the connecting arm is rotatably connected to the rotating shaft. Two ends of the elastic member are respectively connected to the connecting arm and the mounting frame.

Optionally, the connecting arm includes an arm body and an arm sleeve disposed at one end of the arm body, the arm sleeve is disposed around the rotating shaft, the elastic member has an arcuate structure disposed around an axis of the rotating shaft, and the elastic member is disposed around the arm sleeve of the connecting arm.

Optionally, a mounting base is disposed on and protrudes from an end of the mounting frame, and a mounting cavity is defined inside the mounting base. The one end of the box cover is hinged to the mounting base through the rotating shaft, and the rotating shaft passes through the mounting cavity. A first through groove is further defined in the mounting base and is in communication with the mounting cavity, and an extending direction of the first through groove is perpendicular to the rotating shaft. The another end of the connecting arm away from the box cover passes through the first through groove and is connected to a part of the rotating shaft located within the mounting cavity. The mounting cavity includes an arcuate inner wall matched with an extending and retracting direction of the elastic member, and the elastic member is located between the rotating shaft and the arcuate inner wall and is configured to extend and retract along the arcuate inner wall.

Optionally, the mounting frame further includes a blocking member, the blocking member is mounted at the mounting base, and at least part of the blocking member is located within the mounting cavity; and an end of the elastic member away from the connecting arm is connected to the blocking member.

Optionally, a protruding direction of the mounting base is a direction from the mounting frame toward the box cover, a second through groove is disposed at a side of the mounting frame away from the box cover and is in communication with the mounting cavity, and the elastic member is configured to be placed within the mounting cavity through the second through groove.

Optionally, a support base is disposed on and protrudes from the one end of the box cover, a first recess is defined at a side surface of the support base facing the mounting base, and at least part of the mounting base is located within the first recess; the support base is hinged to the mounting base through the rotating shaft; a bottom wall of the first recess is an arcuate bottom wall, and a side surface of the mounting base includes an arcuate convex surface that cooperates with the arcuate bottom wall; and an axis of the arcuate convex surface and an axis of the arcuate bottom wall are collinear with an axis of the rotating shaft, and the arcuate inner wall of the mounting cavity is disposed corresponding to the arcuate convex surface and extends along a curvature direction of the arcuate convex surface, and the first through groove penetrates from the arcuate convex surface to the arcuate inner wall.

Optionally, a third through groove is defined in the mounting base and is in communication with the mounting cavity, and an extending direction of the third through groove is parallel to the axis of the arcuate convex surface; one end of the first through groove is in communication with the third through groove; the connecting arm further includes an arm rod disposed at the other end of the arm body; a size of the arm rod is less than or equal to a size of the third through groove; and the arm body passes through the first through groove, and the arm rod is connected to the support base.

Optionally, a second recess is further defined in the support base, a depth direction of the second recess is parallel to a radial direction of the arcuate bottom wall; a bottom wall of the second recess is in communication with the first recess through a fourth through groove, and the fourth through groove extends to an opening of the first recess along a curvature direction of the arcuate bottom wall; a fifth through groove is defined in a side wall of the second recess, and the fifth through groove is in communication with the fourth through groove; the arm rod is located at the bottom wall of the first recess; and the arm body is configured to move around the axis of the rotating shaft in the fourth through groove and the fifth through groove.

The storage box according to the embodiment of the present disclosure has the following beneficial effects. The storage box may be a glove box arranged at the lower right of the instrument panel. Specifically, the mounting frame may be embedded in the instrument panel, one end (such as a bottom end) of the box cover may be hinged to a bottom end of the mounting frame through the rotating shaft, thereby enabling the box cover to rotate downward to open or rotate upward to close relative to the mounting frame, and the box cover or the mounting frame may be integrated with a storage bin for storage. Two ends of the connecting arm of the damping device are respectively connected with the box cover and the rotating shaft, so that the rotation of the box cover will also drive the connecting arm to swing around the axis of the rotating shaft. Two ends of the elastic member are respectively connected to the connecting arm and the mounting frame, and hence, when the box cover rotates downward to open, the swinging connecting arm can compress the elastic member, thereby generating a damping force during opening of the box cover by means of the compressed elastic member. The length of the connecting arm can be designed to be very short, as long as the end of the connecting arm away from the rotating shaft is connected to the position of the box cover close to the rotating shaft, which almost does not occupy the vertical space of the storage bin. Furthermore, the connecting arm has a linear structure, and the size of the connecting arm in the axial direction of the rotating shaft is basically negligible, thereby avoiding extra occupation of the transverse space inside the instrument panel, and thus avoiding occupation of the transverse space of the storage bin. In addition, the elastic member may be arranged at the position where the rotating shaft is connected to the connecting arm, that is, the integration degree of the elastic member and the connecting arm in the axial direction of the rotating shaft is also relatively high. Therefore, the integration degree of the entire damping device is higher than that of the conventional damping structure, and the entire damping device may occupy only a small space at a partial axial position of the rotating shaft for arrangement, thereby enabling the storage bin to have a larger storage space.

An embodiment of the present disclosure further provides an instrument panel assembly, including the storage box as described above.

Since the technical improvements and technical effects of the instrument panel assembly are the same as those of the storage box, no further description of the instrument panel assembly is provided herein.

Optionally, the battery pack further includes a liquid cooling plate, the liquid cooling plate is in contact with one side surface of the housing of the battery cell, and the thermally conductive adhesive is disposed close to the side surface of the housing in contact with the liquid cooling plate.

An embodiment of the present disclosure further provides a vehicle, including the storage box as described above, or including the instrument panel assembly as described above.

Since the technical improvements and technical effects of the vehicle are the same as those of the storage box or the instrument panel assembly, no further description of the vehicle is provided herein.

Other aspects will be appreciated upon reading and understanding the detailed description.

### BRIEF DESCRIPTION OF DRAWINGS

FIG. 1 is a schematic diagram of an overall structure of a storage box in a closed state according to an embodiment of the present disclosure.
FIG. 2 is a schematic diagram illustrating a sectional structure of FIG. 1.
FIG. 3 is a schematic diagram of a partial transverse structure of a storage box according to an embodiment of the present disclosure.
FIG. 4 is a schematic diagram of a structure of FIG. 3 with a storage bin removed.
FIG. 5 is a first schematic exploded view of FIG. 4.
FIG. 6 is a second schematic exploded view of FIG. 4.
FIG. 7 is a schematic structural diagram of a connecting arm according to an embodiment of the present disclosure.

Description of reference signs:
1, mounting frame; 11, mounting base; 111, mounting cavity; 112, first through groove; 113, second through groove; 114, third through groove; 115, arcuate convex surface; 116, base side surface; 2, box cover; 21, support base; 211, first recess; 2111, arcuate bottom wall; 2112, first recess side wall; 212, second recess; 213, fourth through groove; 214, fifth through groove; 215, first circular hole; 3, rotating shaft; 4, elastic member; 5, connecting arm; 51, arm body; 52, arm sleeve; 53, arm rod; 6, blocking member; 7, storage bin.

### DETAILED DESCRIPTION

To make the foregoing objectives, features, and advantages of the embodiments of the present disclosure more comprehensible, the specific embodiments of the present disclosure will be described in detail below with reference to the accompanying drawings.

In the description of the embodiments of the present disclosure, unless otherwise expressly specified and defined, the terms "mounted", "coupled", "connected", and "fit" should be understood in a broad sense. These terms may refer to, for example, a fixed connection, a detachable connection, or an integral connection, may refer to a mechanical connection or an electrical connection, may refer to a direct connection or an indirect connection through an intervening medium, or may refer to an internal communication between two elements. For those skilled in the art, the specific meanings of the above terms in the embodiments of the present disclosure can be understood according to specific situations.

In addition, it should also be noted that, in the description of the embodiments of the present disclosure, the orientation terms indicated by the terms such as "upper", "lower", "front", "rear" and the like in the embodiments are only for the purpose of simplifying the description of the positional relationship based on the drawings of the specification, and do not mean that the elements, devices and the like referred to herein are required to be operated according to the specific orientation, operations, methods and structures defined in the specification, and such orientation terms should not be construed as limiting the embodiments of the present disclosure.

Moreover, in the drawings, an X axis represents the longitudinal direction, that is, the front-rear direction of the vehicle, where the positive direction of the X axis indicates the forward direction, and the negative direction of the X axis indicates the rearward direction. In the drawings, a Y axis represents the transverse direction, that is, the left-right direction of the vehicle, where the positive direction of the Y axis indicates the leftward direction, and the negative direction of the Y axis indicates the rightward direction. In the drawings, a Z axis represents the vertical direction, that is, the up-down direction of the vehicle, where the positive direction of the Z axis indicates the upward direction, and the negative direction of the Z axis indicates the downward direction. In addition, it should be noted that the foregoing definitions of the X-axis, Y-axis, and Z-axis are provided merely to facilitate the description of the embodiments of the present disclosure and simplify the description, rather than indicating or implying that the device or element referred to herein must have a specific orientation, be constructed and operated in a specific orientation, and therefore cannot be construed as limiting the embodiments of the present disclosure.

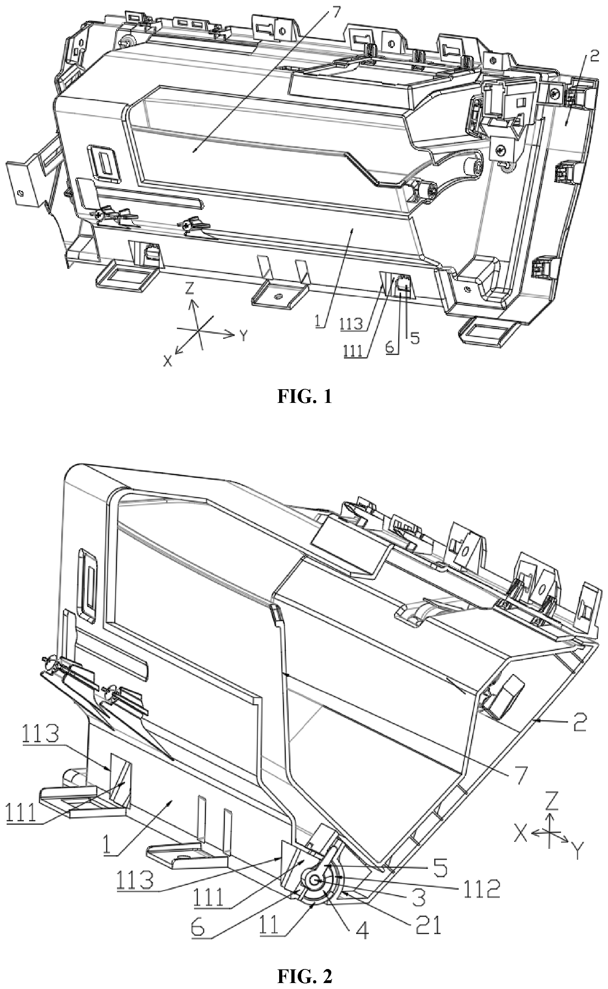

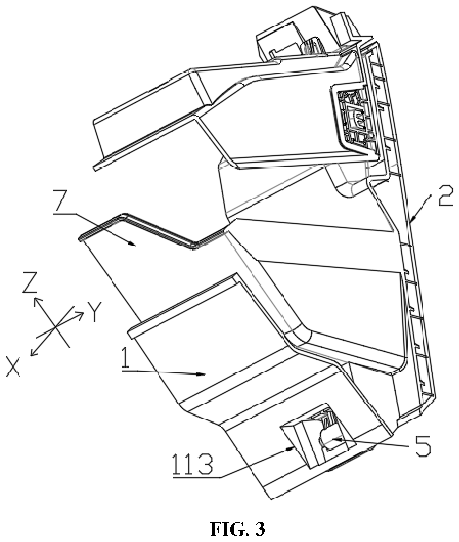

Referring to FIGS. 1 to 3, a storage box according to an embodiment of the present disclosure includes a mounting frame 1, a rotating shaft 3, a box cover 2 and a damping device. The damping device includes an elastic member 4 and a connecting arm 5. One end of the box cover 2 is hinged to the mounting frame 1 through the rotating shaft 3. One end of the connecting arm 5 is connected to the box cover 2, the other end of the connecting arm 5 is rotatably connected to the rotating shaft 3. Two ends of the elastic member 4 are respectively connected to the connecting arm 5 and the mounting frame 1.

In this embodiment, the storage box may be a glove box arranged at the lower right of the instrument panel. Specifically, the mounting frame 1 may be embedded in the instrument panel, one end (such as a bottom end) of the box cover 2 may be hinged to a bottom end of the mounting frame 1 through the rotating shaft 3, thereby enabling the box cover 2 to rotate downward to open or rotate upward to close relative to the mounting frame 1, and the box cover 2 or the mounting frame 1 may be integrated with a storage bin 7 for storage. Two ends of the connecting arm 5 of the damping device are respectively connected with the box cover 2 and the rotating shaft 3, so that the rotation of the box cover 2 will also drive the connecting arm 5 to swing around the axis of the rotating shaft 3. Two ends of the elastic member 4 are respectively connected to the connecting arm 5 and the mounting frame 1, and hence, when the box cover 2 rotates downward to open, the swinging connecting arm 5 can compress the elastic member 4, thereby generating a damping force during opening of the box cover 2 by means of the compressed elastic member 4. The length of the connecting arm 5 can be designed to be very short, as long as the end of the connecting arm 5 away from the rotating shaft 3 is connected to the position of the box cover 2 close to the rotating shaft 3, which almost does not occupy the vertical space of the storage bin 7. Furthermore, the connecting arm 5 has a linear structure, and the size of the connecting arm 5 in the axial direction of the rotating shaft 3 is basically negligible, thereby avoiding extra occupation of the transverse space inside the instrument panel, and thus avoiding occupation of the transverse space of the storage bin 7. In addition, the elastic member 4 may be arranged at the position where the rotating shaft 3 is connected to the connecting arm 5, that is, the integration degree of the elastic member 4 and the connecting arm 5 in the axial direction of the rotating shaft 3 is also relatively high. Therefore, the integration degree of the entire damping device is higher than that of the conventional damping structure, and the entire damping device may occupy only a small space at a partial axial position of the rotating shaft 3 for arrangement, thereby enabling the storage bin 7 to have a larger storage space.

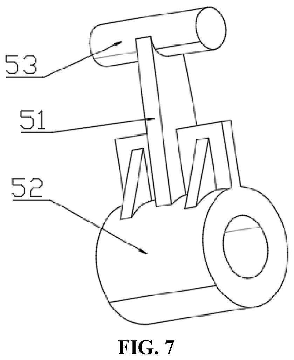

Referring to FIGS. 2 and 7, optionally, one end of the connecting arm 5 is provided with an arm sleeve 52. The arm sleeve 52 is disposed around or sleeved onto the rotating shaft 3, the elastic member 4 has an arcuate structure disposed around the axis of the rotating shaft 3, and the elastic member 4 is disposed around the arm sleeve 52 of the connecting arm 5.

In this embodiment, the elastic member 4 has an arcuate structure encircling the rotating shaft 3. One end of the elastic member 4 is compressed or stretched when the connecting arm 5 rotates, causing the elastic member 4 to extend and retract, and the extending and retracting direction of the elastic member 4 is an arcuate direction encircling the axis of the rotating shaft 3. Since the elastic member 4 can surround a part of the circumferential side surface of the rotating shaft 3 in the circumferential direction, the radial distance between the elastic member 4 and the rotating shaft 3 can be very small or even zero, thereby improving the radial integration degree of the elastic member 4 and the rotating shaft 3.

The connecting arm 5 specifically includes an arm body 51 and the arm sleeve 52 arranged at one end of the arm body 51. The end of the connecting arm 5 away from the box cover 2 is sleeved on or disposed around the rotating shaft 3 through the arm sleeve 52, enabling the connecting arm 5 to swing about the rotating shaft 3, and facilitating the assembly of the rotating shaft 3 and the connecting arm 5. In the presence of the arm sleeve 52, the elastic member 4 with the arcuate structure specifically surrounds a part of the circumferential side surface of the arm sleeve 52 in the circumferential direction. The radial distance between the elastic member 4 and the arm sleeve 52 may be very small or even zero, thereby improving the integration degree of the elastic member 4 and the arm sleeve 52 in the radial direction of the rotating shaft 3.

Referring to FIG. 2 and FIGS. 4 to 6, optionally, a mounting base 11 is disposed on one end of the mounting frame 1 in a protruding manner, and a mounting cavity 111 is defined within the mounting base 11. One end of the box cover 2 is hinged to the mounting base 11 through the rotating shaft 3, and the rotating shaft 3 passes through the mounting cavity 111. The mounting base 11 further defines a first through groove 112 that is in communication with the mounting cavity 111, and an extending direction of the first through groove 112 is perpendicular to the rotating shaft 3. The end of the connecting arm 5 away from the box cover 2 passes through the first through groove 112 and is connected to a part of the rotating shaft 3 located within the mounting cavity 111. The mounting cavity 111 includes an arcuate inner wall matched with the extending and retracting direction of the elastic member 4, and the elastic member 4 is located between the rotating shaft 3 and the arcuate inner wall and configured to extend and retract along the arcuate inner wall.

It should be noted that, in a conventional glove box, in order to realize a hinged relationship between the mounting frame 1 and the box cover 2, the mounting cavity 111 is usually disposed on and protrudes from the bottom end of the mounting frame 1. In order to avoid occupying vertical space, the mounting base 11 is usually disposed on and protrudes from the bottom end of the mounting frame 1 towards the box cover 2, that is, the mounting base 11 protrudes rearward. The box cover 2 is then hinged to the mounting base 11 via the rotating shaft 3, so as to realize the hinged connection between the box cover 2 and the mounting frame 1. Meanwhile, the mounting base 11 does not additionally occupy the transverse space inside the instrument panel unlike conventional air dampers and rack-and-pinion dampers, nor does it additionally occupy the longitudinal space within the instrument panel unlike cable dampers. On this basis, the embodiment of the present disclosure optimizes the mounting base 11. That is, after the rotating shaft 3 passes through the mounting base 11, the rotating shaft 3 is not in full contact with the mounting base 11 in the radial direction. Instead, the mounting cavity 111 is defined inside the mounting base 11, and there is a certain space (i.e., the aforementioned "radial space") between the rotating shaft 3 and the side wall of the mounting cavity 111 in the radial direction. The elastic member 4 in the damping device of the storage box is then disposed within the radial space, that is, the elastic member 4 is disposed between the rotating shaft 3 and the side wall of the mounting cavity 111. Meanwhile, when the connecting arm 5 connects the box cover 2 and the rotating shaft 3, the rotation of the box cover 2 enables the elastic member to extend and retract along the arcuate inner wall of the mounting cavity 111. The extending direction of the first through groove 112 is perpendicular to the rotating shaft 3, and may be the arcuate direction surrounding the rotating shaft 3, thereby allowing the connecting arm 5 to swing within the first through groove 112.

The specific structure of the elastic member 4 is not limited, and may be any elastic structure, such as a spring. It may also include other elastic materials and substances, such as rubber, balloon, rubber ball, elastic rope, plasticine, plastic material, etc. In addition, many artificial materials and synthetic fibers also have elasticity, such as elastic fibers, elastic fabrics, etc. In nature, many organisms also have elasticity, such as skin, muscle, stems and leaves of plants, etc. These materials and substances can return to their original state or shape after being subjected to force, thereby exhibiting elastic characteristics.

Referring to FIGS. 1 and 2, optionally, the mounting frame 1 further includes a blocking member 6. The blocking member 6 is mounted at the mounting base 11, at least part of the blocking member 6 is located within the mounting cavity 111, and the end of the elastic member 4 away from the connecting arm 5 is connected to the blocking member 6.

In this embodiment, the damping device further includes a blocking member 6. With the blocking member 6, the connection relationship between the elastic member 4 and the connecting arm 5 may be an abutting relationship, and the end of the elastic member 4 away from the connecting arm 5 is also in an abutting relationship with the blocking member 6. Therefore, the end of the elastic member 4 away from the connecting arm 5 is maintained in a relatively fixed relationship with the mounting base 11 through the blocking member 6.

Specifically, the blocking member 6 may be a plate-shaped structure, which is referred to as a blocking plate. An insertion port communicating with the mounting cavity 111 is further defined in the bottom of the mounting base 11. The blocking plate may be inserted into the mounting cavity 111 through the insertion port, so that a part of the blocking plate is located within the mounting cavity 111 for abutting against the elastic member 4, and another part of the blocking plate is located within the insertion port for sealing the insertion port. The blocking plate may be in a snap-fit relationship with the mounting base 11, and the blocking plate inserted into place may be fixed in position through a snap-fit structure. Alternatively, the blocking plate may be in an interference fit relationship with the insertion port, and the blocking plate may also be fixed in position.

Referring to FIGS. 1 to 3, and FIG. 5, optionally, a protruding direction of the mounting base 11 is a direction from the mounting frame 1 toward the box cover 2, and a second through groove 113 communicating with the mounting cavity 111 is defined on a side of the mounting frame 1 away from the box cover 2.

In this embodiment, as described above, the mounting base 11 protrudes from the bottom end of the mounting frame 1 toward the box cover 2. That is, the protruding direction of the mounting base 11 is the direction from the mounting frame 1 toward the box cover 2. In other words, the mounting base 11 protrudes rearward from the bottom end of the mounting frame 1, which does not occupy additional space, particularly does not occupy additional transverse space inside the instrument panel. The second through groove 113 communicating with the mounting cavity 111 is defined on the side (i.e., the front side) of the mounting frame 1 away from the box cover 2. That is, the front side of the mounting cavity 111 is open, which facilitates the demolding of the mounting base 11 with the mounting cavity 111, and also allows the elastic member 4 to be placed into the mounting cavity 111 through the second through groove 113.

Referring to FIGS. 2 and 4 to 6, optionally, a support base 21 protrudes from one end of the box cover 2. A first recess 211 is defined in a side surface of the support base 21 facing the mounting base 11. At least part of the mounting base 11 is located within the first recess 211. The support base 21 is hinged to the mounting base 11 through the rotating shaft 3. A bottom wall of the first recess 211 is an arcuate bottom wall 2111, and the side surface of the mounting base 11 includes an arcuate convex surface 115. The arcuate convex surface 115 cooperates with the arcuate bottom wall 2111. An axis of the arcuate convex surface 115 and an axis of the arcuate bottom wall 2111 are collinear with an axis of the rotating shaft 3. The arcuate inner wall is disposed corresponding to the arcuate convex surface 115 and extends along the curvature direction of the arcuate convex surface 115, and the first through groove 112 penetrates from the arcuate convex surface 115 to the arcuate inner wall.

In this embodiment, the support base 21 protrudes from the bottom end of the box cover 2 toward the mounting frame 1. Specifically, the support base 21 is hinged to the mounting base 11 through the rotating shaft 3, so that the box cover 2 is hinged to the mounting frame 1. On this basis, the first recess 211 is defined in the side surface of the support base 21 facing the mounting base 11. The recess bottom wall of the first recess 211 is an arcuate wall, denoted as an arcuate bottom wall 2111. The side surface of the mounting base 11 facing the support base 21 includes the arcuate convex surface 115. At least part of the mounting base 11 is disposed within the first recess 211, and axes of the arcuate convex surface 115 and the arcuate bottom wall 2111 are both collinear with the axis of the rotating shaft 3. When the box cover 2 rotates, the arcuate bottom wall 2111 remains at least partially in contact with the arcuate convex surface 115, thereby improving the integration degree between the support base 21 and the mounting base 11, and consequently improving the integration degree of the storage box. The first through groove 112 is arranged at the arcuate convex surface 115 and extends along the curvature direction of the arcuate convex surface 115. That is, the first through groove 112 is an arcuate through groove, and when the box cover 2 rotates, the connecting arm 5 moves along the curvature direction of the arcuate through groove to realize swing.

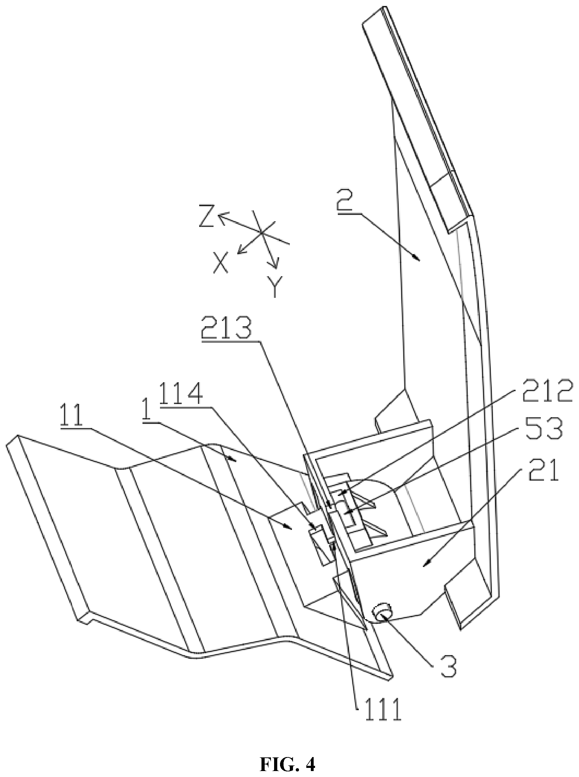

Referring to FIGS. 4 to 7, optionally, a third through groove 114 is defined in the mounting base 11 and is in communication with the mounting cavity 111, and an extending direction of the third through groove 114 is parallel to the axis of the arcuate convex surface 115. One end of the first through groove 112 is in communication with the third through groove 114. The connecting arm 5 further includes an arm rod 53 arranged at the other end of the arm body 51 (i.e., the end away from the arm sleeve 52). A size of the arm rod 53 is less than or equal to a size of the third through groove 114. The arm body 51 passes through the first through groove 112, and the arm rod 53 is connected to the support base 21.

In this embodiment, the arm body 51 is perpendicular to both the axis of the arm sleeve 52 and the axis of the arm rod 53. When the connecting arm 5 is assembled, the arm rod 53 of the connecting arm 5 may first be moved rearward into the mounting cavity 111 through the second through groove 113, and then extend out of the mounting base 11 through the third through groove 114, so that the arm sleeve 52 is located within the mounting cavity 111. Subsequently, the arm rod 53 may be connected to the support base 21, and finally the rotating shaft 3 passes through the mounting base 11 and the support base 21. The size of the arm rod 53 is less than or equal to the size of the third through groove 114, which specifically means that an axial size of the arm rod 53 is less than or equal to a length of the third through groove 114, and a diameter of the arm rod 53 is less than or equal to a width of the third through groove 114, ensuring that the arm rod 53 can extend out of the mounting base 11 through the third through groove 114. The third through groove 114 is in communication with one end of the first through groove 112, ensuring that after the arm rod 53 and a part of the arm body 51 extend out of the mounting base 11 through the third through groove 114 (with the arm sleeve 52 remaining in the mounting cavity 111), the arm body 51 can swing into the first through groove 112 and move along the curvature direction of the first through groove 112.

Referring to FIGS. 4 to 6, optionally, a second recess 212 is further disposed on the support base 21. A depth direction of the second recess 212 is parallel to a radial direction of the arcuate bottom wall 2111. A bottom wall of the second recess 212 is in communication with the first recess 211 through a fourth through groove 213. The fourth through groove 213 extends to an opening of the first recess 211 along the curvature direction of the arcuate bottom wall 2111. A fifth through groove 214 is disposed on a side wall of the second recess 212. The fifth through groove 214 is in communication with the fourth through groove 213. The arm rod 53 is located at the bottom wall of the first recess 211, and the arm body 51 is configured to move around the axis of the rotating shaft 3 within the fourth through groove 213 and the fifth through groove 214.

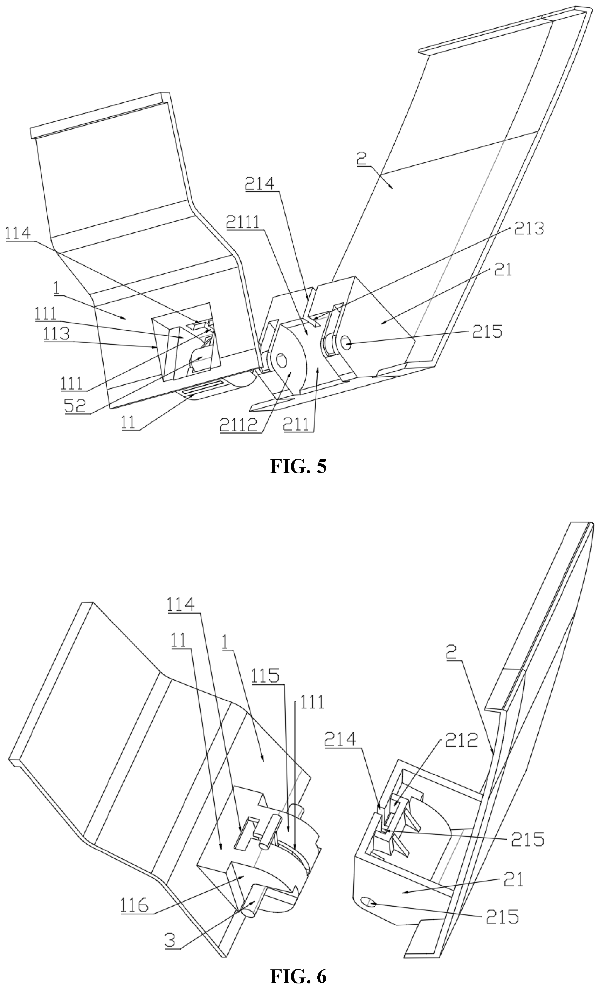

In this embodiment, the second recess 212 is further disposed on the support base 21. The bottom wall of the second recess 212 is in communication with the first recess 211 through the fourth through groove 213. Furthermore, as shown in FIG. 5, one end of the fourth through groove 213 extends to the opening of the first recess 211 along the curvature direction of the arcuate bottom wall 2111. The fifth through groove 214 is further disposed on the side wall of the second recess 212, one end of the fifth through groove 214 extends to the opening of the second recess 212, and the other end of the fifth through groove 214 is in communication with the fourth through groove 213. Therefore, after the arm rod 53 of the connecting arm 5 extends out of the mounting base 11 through the third through groove 114, the arm body 51 can enter the fifth through groove 214 and the fourth through groove 213, enabling the arm rod 53 at one end of the arm body 51 to enter from the opening of the second recess 212 to the bottom position of the second recess 212 (as shown in FIG. 4). Finally, the rotating shaft 3 passes through the mounting base 11 and the support base 21 to assemble them together. Therefore, when the box cover 2 rotates, the box cover 2 will drive the entire connecting arm 5 to swing through the arm rod 53. It can be understood that when the connecting arm 5 swings, the arm body 51 may move within the first through groove 112, the fifth through groove 214 and the fourth through groove.

In this embodiment, after the connecting arm 5 and the rotating shaft 3 are mounted, the storage bin 7 can be mounted on the side of the box cover 2 facing the mounting frame 1. At this time, the bottom of the storage bin 7 can seal the opening of the second recess 212, thereby maximizing the volume of the storage bin 7.

However, in other embodiments, a sixth through groove (not shown in the figure) may be further disposed on the side wall of the second recess 212 where the fifth through groove 214 is located. The extending direction of the sixth through groove is perpendicular to both the extending directions of the fifth through groove 214 and the fourth through groove 213. That is, the extending direction of the sixth through groove is parallel to the axial direction of the arcuate bottom wall 2111, and one end of the sixth through groove is in communication with the fifth through groove 214. That is, the sixth through groove and the fifth through groove 214 form a T-shaped groove, so that the arm rod 53 may also enter the second recess 212 through the sixth through groove. In this case, the storage bin 7 may be integrated onto the box cover 2 in advance.

Referring to FIGS. 4 to 6, optionally, the side walls of the first recess 211 are first recess side walls 2112. Two first recess side walls 2112 are respectively located at two axial ends of the arcuate bottom wall 2111. First circular holes 215 penetrating through the support base 21 are respectively provided at the two first recess side walls 2112. The side surface of the mounting base 11 further includes base side surfaces 116. The two base side surfaces 116 are respectively located at two axial ends of the arcuate convex surface 115. Second circular holes communicating with the mounting cavity 111 are respectively provided on the two base side surfaces 116. The rotating shaft 3 penetrates through the first circular holes 215 and the second circular holes.

In this embodiment, after at least part of the mounting base 11 is disposed within the first recess 211, the two base side surfaces 116 of the mounting base 11 are respectively in one-to-one correspondence with the two first recess side walls 2112 of the first recess 211. After the arm rod 53 is disposed within the second recess 212, the rotating shaft 3 may be sequentially inserted into the first circular holes 215 and the second circular holes to realize the hinging of the support base 21 to the mounting base 11. The base side surfaces 116 may at least partially abut against or maintain a small gap with the corresponding first recess side walls 2112, thereby maximizing the integration degree between the mounting base 11 and the support base 21.

Referring to FIG. 5, optionally, a plane where the opening of the second through groove 113 is located is defined as a reference plane. The projection of the third through groove 114 on the reference plane is located within the opening of the second through groove 113.

Here, the projection of the third through groove 114 on the reference surface is located within the opening of the second through groove 113, meaning that the third through groove 114 is equivalent to being exposed at the second through groove 113, which facilitates the arm rod 53 entering the mounting cavity 111 through the second through groove 113 and then extending out of the mounting base 11 through the third through groove 114.

Another embodiment of the present disclosure provides an instrument panel assembly including the storage box as described above.

Since the technical improvements and technical effects of the instrument panel assembly are the same as those of the storage box, no further description of the instrument panel assembly will be provided herein.

Yet another embodiment of the present disclosure provides a vehicle including the storage box as described above, or including the instrument panel assembly as described above.

Since the technical improvements and technical effects of the vehicle are the same as those of the storage box or the instrument panel assembly, no further description of the vehicle will be provided herein.

The terms, such as "first", "second", and the like, are used for descriptive purposes only, and are not to be construed as indicating or implying relative importance or implicitly indicating the number of indicated technical features. Therefore, features defined with "first" and "second" may explicitly or implicitly include at least one of the features.

Although the embodiments of the present disclosure are disclosed above, the protection scope of the embodiments of the present disclosure is not limited thereto. Various changes and modifications may be made by those skilled in the art without departing from the spirit and scope of the embodiments of the present disclosure, and these changes and modifications all fall within the protection scope of the embodiments of the present disclosure.

## Claims

1. A storage box, comprising a mounting frame (1), a rotating shaft (3), a box cover (2), and a damping device, wherein
the damping device comprises an elastic member (4) and a connecting arm (5),
one end of the box cover (2) is hinged to the mounting frame (1) through the rotating shaft (3),
one end of the connecting arm (5) is connected to the box cover (2), and another end of the connecting arm (5) is rotatably connected to the rotating shaft (3), and
two ends of the elastic member (4) are respectively connected to the connecting arm (5) and the mounting frame (1).

2. The storage box according to claim 1, wherein
the connecting arm (5) comprises an arm body (51) and an arm sleeve (52) disposed at an end of the arm body (51),
the arm sleeve (52) is disposed around the rotating shaft (3),
the elastic member (4) has an arcuate structure disposed around an axis of the rotating shaft (3), and
the elastic member (4) is disposed around the arm sleeve (52) of the connecting arm (5).

3. The storage box according to claim 1 or 2, wherein
a mounting base (11) is disposed on and protrudes from an end of the mounting frame (1), and a mounting cavity (111) is defined inside the mounting base (11);
the one end of the box cover (2) is hinged to the mounting base (11) through the rotating shaft (3), and the rotating shaft (3) passes through the mounting cavity (111);
a first through groove (112) is further defined in the mounting base (11) and is in communication with the mounting cavity (111), and an extending direction of the first through groove (112) is perpendicular to the rotating shaft (3);
the another end of the connecting arm (5) away from the box cover (2) passes through the first through groove (112) and is connected to a part of the rotating shaft (3) located within the mounting cavity (111); and
the mounting cavity (111) comprises an arcuate inner wall matched with an extending and retracting direction of the elastic member (4), and the elastic member (4) is located between the rotating shaft (3) and the arcuate inner wall and is configured to extend and retract along the arcuate inner wall.

4. The storage box according to claim 3, wherein the mounting frame (1) further comprises a blocking member (6),
the blocking member (6) is mounted at the mounting base (11), and at least part of the blocking member (6) is located within the mounting cavity (111), and
an end of the elastic member (4) away from the connecting arm (5) is connected to the blocking member (6).

5. The storage box according to claim 3, wherein a protruding direction of the mounting base (11) is a direction from the mounting frame (1) toward the box cover (2),
a second through groove (113) is disposed at a side of the mounting frame (1) away from the box cover (2) and is in communication with the mounting cavity (111), and
the elastic member (4) is configured to be placed within the mounting cavity (111) through the second through groove (113).

6. The storage box according to claim 3, wherein
a support base (21) is disposed on and protrudes from the one end of the box cover (2),
a first recess (211) is defined at a side surface of the support base (21) facing the mounting base (11), and at least part of the mounting base (11) is located within the first recess (211),
the support base (21) is hinged to the mounting base (11) through the rotating shaft (3),
a bottom wall of the first recess (211) is an arcuate bottom wall (2111), and a side surface of the mounting base (11) comprises an arcuate convex surface (115) that cooperates with the arcuate bottom wall (2111),
an axis of the arcuate convex surface (115) and an axis of the arcuate bottom wall (2111) are collinear with an axis of the rotating shaft (3), wherein the arcuate inner wall of the mounting cavity (111) is disposed corresponding to the arcuate convex surface (115) and extends along a curvature direction of the arcuate convex surface (115), and the first through groove (112) penetrates from the arcuate convex surface (115) to the arcuate inner wall.

7. The storage box according to claim 6, wherein
a third through groove (114) is defined in the mounting base (11) and is in communication with the mounting cavity (111), and an extending direction of the third through groove (114) is parallel to the axis of the arcuate convex surface (115);
one end of the first through groove (112) is in communication with the third through groove (114);
the connecting arm (5) comprises an arm body (51) and an arm rod (53) disposed at an end of the arm body (51) away from the rotating shaft,
a size of the arm rod (53) is less than or equal to a size of the third through groove (114), and
the arm body (51) passes through the first through groove (112), and the arm rod (53) is connected to the support base (21).

8. The storage box according to claim 7, wherein a second recess (212) is further defined in the support base (21);
a depth direction of the second recess (212) is parallel to a radial direction of the arcuate bottom wall (2111);
a bottom wall of the second recess (212) is in communication with the first recess (211) through a fourth through groove (213), and the fourth through groove (213) extends to an opening of the first recess (211) along a curvature direction of the arcuate bottom wall (2111);
a fifth through groove (214) is defined in a side wall of the second recess (212), and the fifth through groove (214) is in communication with the fourth through groove (213);
the arm rod (53) is located at the bottom wall of the first recess (211), and
the arm body (51) is configured to move around the axis of the rotating shaft (3) in the fourth through groove (213) and the fifth through groove (214).

9. An instrument panel assembly, comprising the storage box according to any one of claims 1 to 8.

10. A vehicle, comprising the storage box according to any one of claims 1 to 8, or comprising the instrument panel assembly according to claim 9.
